# FASCICULE DE BREVET EUROPEEN

(11) **EP 4 348 305 B1**
(45) Date de publication et mention de la délivrance du brevet: **04.03.2026**
(21) Numéro de dépôt: 22735522.9
(22) Date de dépôt: 25.04.2022
(51) Int. Cl.: G01S 13/931, G01S 13/08, B60W 30/16, B60W 30/18, G01S 13/86

(54) **PROCÉDÉ ET DISPOSITIF DE MAINTIEN D'UNE SÉLECTION D'UN VÉHICULE CIBLE PAR UN SYSTÈME D'AIDE À LA CONDUITE EMBARQUÉ**
VERFAHREN UND VORRICHTUNG ZUR AUFRECHTERHALTUNG DER AUSWAHL EINES ZIELFAHRZEUGS DURCH EIN BORDEIGENES FAHRASSISTENZSYSTEM
METHOD AND DEVICE FOR MAINTAINING THE SELECTION OF A TARGET VEHICLE BY AN ON-BOARD DRIVING ASSISTANCE SYSTEM

(30) Priorité: 02.06.2021 FR 2105789
(43) Date de publication de la demande: 10.04.2024
(73) Titulaire: Stellantis Auto SAS, 78300 Poissy (FR)
(72) Inventeur: AIT ALI, Meriem, Casablanca, 20580 (MA); ABOULISSANE, Badreddine, Taroudant, 83350 (MA); EL HANBALI, Hamza, Casablanca, 20450 (MA); LAHLOU, Zoubida, Casablanca, 20190 (MA); MAHJOUR, Wissal, Casablanca, 20470 (MA)
(74) Mandataire: ESIP
(86) Numéro de dépôt international: PCT/FR2022/050777
(87) Numéro de publication internationale: WO 2022/254108

(56) Documents cités:
- DE-A1- 102019 203 610
- US-A1- 2013 085 976
- US-A1- 2017 341 647
- BRENDAN MORRIS ET AL: "Lane change intent prediction for driver assistance: On-road design and evaluation", INTELLIGENT VEHICLES SYMPOSIUM (IV), 2011 IEEE, IEEE, 5 June 2011 (2011-06-05), pages 895 - 901, XP031999048, ISBN: 978-1-4577-0890-9, DOI: 10.1109/IVS.2011.5940538

## Description

L'invention est dans le domaine des systèmes d'aide à la conduite de véhicule autonome. En particulier, l'invention concerne un maintien d'une sélection d'un véhicule cible par un système d'aide à la conduite embarqué dans un égo-véhicule lorsque ledit égo-véhicule se déplace latéralement.

« Gauche », « droite », « avant » et « arrière » d'un véhicule sont déterminés par rapport au sens normal de marche du véhicule.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les procédés aptes à assister la conduite du véhicule sont aussi nommés ADAS (de l'acronyme anglais « Advanced Driver Assistance Systems »), systèmes ADAS ou systèmes d'aide à la conduite. Actuellement, un véhicule commercialisé comporte plusieurs systèmes ADAS comme, au moins, un régulateur de vitesse et un système d'aide au maintien dans la voie.

Un régulateur de vitesse d'un égo-véhicule, en particulier les régulateurs de vitesse dits intelligents également nommés ACC (de l'acronyme anglais « Auto Cruise Control »), sont aptes à réguler la vitesse de l'égo-véhicule en fonction d'une distance relative entre ledit égo-véhicule et un véhicule cible, qui circule devant l'égo-véhicule, en fonction d'une distance relative entre l'égo-véhicule et le véhicule cible. Cette régulation est également fonction de consignes d'un conducteur de l'égo-véhicule comme une vitesse et un temps inter-véhicule (distance avec le véhicule cible, distance qui dépend d'une vitesse instantanée de l'égo-véhicule). Une mesure classique de la distance relative est obtenue par un LIDAR. Lorsqu'un véhicule cible est détecté, il est sélectionné par l'ACC pour adapter la vitesse de l'égo-véhicule. Par exemple, sur autoroute le conducteur a fixé une consigne de vitesse de 130 km/h et un temps inter-véhicule de 2 secondes. En absence de détection d'un véhicule cible, le régulateur de vitesse régule la vitesse à la consigne soit 130 km/h. A l'approche d'un ralentissement, par la détection d'un véhicule cible, qui circule par exemple à 60 km/h, le régulateur de vitesse va réduire la vitesse de l'égo-véhicule à 60 km/h tout en gardant un temps de parcours de 2 secondes entre l'égo-véhicule et le véhicule cible, tant que le véhicule cible est sélectionné. En cas de perte de détection du véhicule cible par le LIDAR, par exemple lorsque le véhicule cible s'écarte latéralement de plusieurs mètres par rapport à l'égo-véhicule, en absence de détection d'un autre véhicule cible, la vitesse du véhicule cible n'est plus sélectionnée et la consigne repasse à 130 km/h.

Un système de maintien dans la voie également nommé LKA (de l'acronyme anglais « Lane Keeping Assist ») est apte à maintenir un véhicule dans sa voie s'il détecte un début de changement voie sans intention donnée par un conducteur, l'intention étant détectée, par exemple, par un enclenchement d'un clignotant du côté du changement de voie détecté. Un véhicule avec un LKA comprend une caméra frontale apte à capturer des images devant l'égo-véhicule, et apte à traiter ces images capturées. Un système LKA est apte à détecter aussi un changement de voie de l'égo-véhicule en comparant une trajectoire estimée de la route avec une trajectoire estimée de l'égo-véhicule. Lors d'une détection d'un changement de voie non intentionnel, le système LKA maintien le véhicule dans sa voie en modifiant une trajectoire du véhicule, par exemple en générant un couple ou un effort sur le système de direction. Un conducteur reste apte à compenser le coupe ou l'effort généré par le system LKA, par exemple si le conducteur souhaite circuler sur la même voie mais décalé latéralement par rapport à un milieu de voie pour pouvoir, par exemple, éviter un obstacle, laisser passer une moto, ...

Actuellement, coupler un système ACC avec un système LKA génère des problèmes. En effet, lorsque le système LKA détecte un changement de voie alors le système ACC en est informé et le système ACC ne prend plus en compte le véhicule cible, la sélection du véhicule cible n'est plus maintenue. Dans l'exemple précédent, la consigne de vitesse passe alors de 60 km/h à 130 km/h. Si le conducteur reste dans la voie, le véhicule cible est à nouveau sélectionné et la consigne de vitesse passe de 130 km/h à 60 km/h. Un compromis de paramétrage des systèmes LKA et ACC est alors difficile à trouver. En effet, si on souhaite avoir une détection de changement de voie très réactif et prédictif par le système LKA, alors il est nécessaire de régler l'ACC de façon peu réactive, et vice-versa.

En outre, l'état de la technique est connu des documents DE102019203610A1, US2017341647A1, US2013085976A1 et de la publication « Lane change intent prediction for driver assistance : On-road design and evaluation », Intelligent Vehicles Symposium (IV), 2011 IEEE, 5 juin 2011, pp 895-901.

Un objet de la présente invention est de remédier au problème précité, en particulier éviter les oscillations entre vitesse de consigne du régulateur de vitesse et avoir un bon compris de réglage entre un système de régulation de vitesse et un système de maintien dans la voie.

A cet effet, un premier aspect de l'invention concerne un procédé de maintien d'une sélection d'un véhicule cible par un système d'aide à la conduite embarqué dans un égo-véhicule lorsque ledit égo-véhicule se déplace latéralement sur une voie dite égo-voie, ledit système d'aide à la conduite comprenant une caméra apte à détecter ledit déplacement latéral, ledit système d'aide à la conduite comprenant, en outre, un régulateur de vitesse apte à réguler la vitesse de l'égo-véhicule en fonction d'une distance relative entre ledit égo-véhicule et ledit véhicule cible, ledit véhicule cible circulant sur ladite égo-voie devant ledit égo-véhicule, ledit procédé comportant les étapes de :
- Détection, par la caméra, dudit déplacement latéral de l'égo-véhicule et détermination d'un côté latéral dudit déplacement latéral de l'égo-véhicule, ledit côté déterminé est dit côté déplacement, un côté opposé audit côté déplacement est dit côte opposé ;
- Détection, par un capteur fondé sur une mesure d'une réflexion d'onde émise par ledit capteur, d'un objet situé à gauche ou à droite par rapport audit égo-véhicule, ladite détection détermine une probabilité de présence, détermine une position par rapport à audit égo-véhicule, et détermine un côté, côté déplacement ou côté opposé, où se situe ledit objet détecté par rapport à l'égo-véhicule ;
- Détermination d'une distance latérale relative entre ledit égo-véhicule et ledit objet détecté ;
- Si ladite probabilité de présence est supérieure à un seuil prédéterminé, alors si l'objet détecté est du côté déplacement, tant que ladite distance latérale relative est supérieure à un premier seuil alors la sélection dudit véhicule cible est maintenue, et si l'objet détecté est du côté opposé, tant que ladite distance latérale relative est inférieure à un deuxième seuil alors la sélection du véhicule cible est maintenue, le premier seuil et/ou le deuxième seuil étant fonction d'une détermination de largeur de l'égo-voie.

Ainsi, l'absence d'une intention de changement de voie est clairement détectée. Le régulateur de vitesse continue à réguler la vitesse de l'égo-véhicule en fonction de la distance relative par rapport audit véhicule cible. La variation de vitesse du véhicule reste sensiblement égale à la variation de vitesse du véhicule cible. Cette variation de vitesse est alors bien comprise par les occupants dudit égo-véhicule et est alors confortable. Il n'y a pas de variation brusque de la vitesse de régulation, en particulier si la vitesse dudit véhicule cible est sensiblement différente, de l'ordre de 10% ou plus, par rapport à une vitesse cible de régulation, par exemple, préalablement paramétrée par un occupant dudit égo-véhicule. Par ailleurs, le réglage des systèmes en est simplifié.

Avantageusement, la détection dudit déplacement latéral de l'égo-véhicule est fonction d'une identification paramétrique d'une courbe d'une ligne de l'égo-voie.

Avantageusement, la détection d'un objet et la détermination de la distance latérale relative sont déterminées à partir d'un traitement d'informations issues d'au moins un radar embarqué sur ledit égo-véhicule.

Avantageusement, la détection d'un objet et la détermination de la distance latérale relative sont déterminées à partir d'un traitement d'informations issues d'au moins un capteur ultra-sons embarqué sur ledit égo-véhicule.

Avantageusement, le premier seuil et/ou le deuxième seuil est fonction de l'objet détecté.

Ainsi, l'absence d'une intention de changement de voie est clairement détectée et est plus fiable. En effet, l'objet détecté peut être fixe, comme par exemple une rambarde au bord de la route, ou mobile, comme par exemple un véhicule circulant à côté de l'égo-véhicule.

Ainsi, l'absence d'une intention de changement de voie est clairement détectée et est plus fiable et est fonction, par exemple, d'un type de route (comme par exemple une départementale, une autoroute, ...).

Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de maintien d'une sélection d'un véhicule cible par un système d'aide à la conduite embarqué dans un égo-véhicule, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

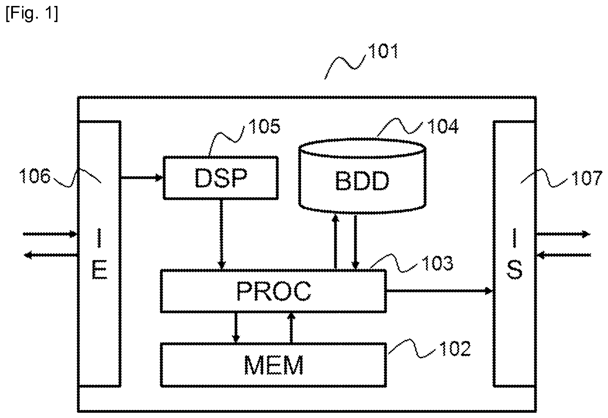

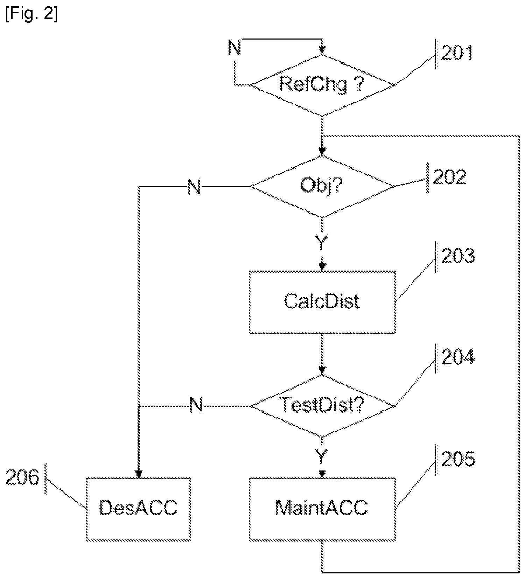

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

La figure 2 illustre schématiquement un procédé de maintien d'une sélection d'un véhicule cible par un système d'aide à la conduite embarqué dans un égo-véhicule, selon un exemple particulier de réalisation de la présente invention. Dans cet exemple, ledit égo-véhicule se déplace latéralement sur une voie dite égo-voie, ledit système d'aide à la conduite comprenant une caméra apte à détecter ledit déplacement latéral, ledit système d'aide à la conduite comprenant, en outre, un régulateur de vitesse apte à réguler la vitesse de l'égo-véhicule en fonction d'une distance relative entre ledit égo-véhicule et ledit véhicule cible, et ledit véhicule cible circulant sur ladite égo-voie devant ledit égo-véhicule.

L'étape 201, RefChg, est une étape de détection, par la caméra, dudit déplacement latéral de l'égo-véhicule et détermination d'un côté latéral dudit déplacement latéral de l'égo-véhicule, ledit côté déterminé est dit côté déplacement, un côté opposé audit côté déplacement est dit côte opposé.

Classiquement, la caméra embarquée est placée en haut de pare-brise de l'égo-véhicule et capture des images de l'avant de l'égo-véhicule. Par un traitement d'image, ce dispositif est apte à modéliser, par une identification paramétrique, en temps réel :
- Une trajectoire de l'égo-véhicule sur plusieurs dizaines de mètres ;
- Une trajectoire d'une ligne, par exemple un ligne blanche marquée au sol indiquant une délimitation latérale de l'égo-voie ;
- Une trajectoire de l'égo-voie sur laquelle circule l'égo-véhicule. Cette trajectoire est déterminée à partir de trajectoires de lignes sur la voie ;
- Un placement de l'égo-véhicule par rapport au centre de l'égo-voie.

Avantageusement, la détection dudit déplacement latéral de l'égo-véhicule est fonction d'une identification paramétrique d'une courbe d'une ligne de l'égo-voie. Il s'agit de comparer la trajectoire modélisée de l'égo-véhicule par rapport à la trajectoire d'une ligne de l'égo-voie. En fonction de l'évolution de l'écart, le dispositif est apte à détecter un déplacement latéral de l'égo-véhicule.

L'étape 202, Obj ?, est une étape de détection, par un capteur fondé sur une mesure d'une réflexion d'onde émise par ledit capteur, d'un objet situé à gauche ou à droite par rapport audit égo-véhicule, ladite détection détermine une probabilité de présence, détermine une position par rapport audit égo-véhicule, et détermine un côté, côté déplacement ou côté opposé, où se situe ledit objet détecté par rapport à l'égo-véhicule.

Avantageusement, la détection d'un objet est déterminée à partir d'un traitement d'informations issues d'au moins un radar embarqué sur ledit égo-véhicule et/ou d'au moins un capteur ultra-sons embarqué sur ledit égo-véhicule.

Dans un mode opératoire préféré, les capteurs ultrasons utilisés pour des manœuvres de parking déterminent la présence d'un objet (véhicule, rambarde, ...) situé latéralement, à gauche ou à droite, par rapport à l'égo-véhicule. Classiquement, ces capteurs sont répartis autour du véhicule. Un dispositif associé à ces capteurs est apte à mesure la distance de l'objet détecté par rapport à un capteur qui détecte l'objet.

Avantageusement, la probabilité de présence est classiquement calculée par une redondance de détection (redondance locale et/ou temporelle : plusieurs capteurs détectent un même objet et/ou un objet est détecté pendant plusieurs instants). Avantageusement, la position d'un objet par rapport audit égo-véhicule est déterminée par un calcul sur un temps de vol de réflexions d'onde émises par le capteur.

L'étape 203, CalcDist, est une étape de détermination d'une distance latérale relative entre ledit égo-véhicule et ledit objet détecté.

Avantageusement, la détermination de la distance latérale relative est déterminée à partir d'un traitement d'informations issues d'au moins un radar embarqué sur ledit égo-véhicule et/ou d'au moins un capteur ultra-sons embarqué sur ledit égo-véhicule. Avantageusement, la distance d'un objet par rapport audit égo-véhicule est déterminée par un calcul sur un temps de vol de réflexions d'onde émises par le capteur et par la position dudit capteur par rapport à un repère audit égo-véhicule.

L'étape 204, TestDist ?, est une étape des tests. Le test est positif si ladite probabilité de présence est supérieure à un seuil prédéterminé, si ladite distance latérale relative est supérieure à un premier seuil (204) pour un objet détecté du côté déplacement, et si ladite distance latérale relative est inférieure à un deuxième seuil (204) pour un objet détecté du côté opposé. Dans le cas d'un test positif, le procédé passe à l'étape 204 décrite ci-après. A l'inverse le procédé passe à l'étape 205 décrite ci-après.

Le test est négatif si un objet a été détecté et la probabilité de présence est inférieure à un seuil, par exemple 70%.

Le test est également négatif si un objet a été détecté du côté déplacement et si ladite distance latérale relative est inférieure ou égale à un premier seuil. Cela signifie que l'égo-véhicule se rapproche de manière sensible d'un objet du côté déplacement. Le conducteur marque bien son intention de changer de voie.

Le test est également négatif si un objet a été détecté du côté opposé au déplacement et si ladite distance latérale relative est supérieure ou égale à un deuxième seuil. Cela signifie que l'égo-véhicule s'éloigne de manière sensible d'un objet du côté opposé. Le conducteur marque bien son intention de changer de voie. Le premier seuil et le deuxième seuil sont des distances en mètre, avantageusement environ 1 mètre. Le premier seuil et/ou le deuxième seuil est fonction d'une détermination de largeur de l'égo-voie. Ces seuils peuvent également prendre d'autres valeurs entre 0 et 10 mètres et/ou sont fonction d'une largeur de l'égo-véhicule, et/ou sont fonction de l'objet détecté.

L'étape 205, MaintACC, est une étape de de maintien d'une sélection d'un véhicule cible par un système d'aide à la conduite embarqué dans un égo-véhicule lorsque ledit égo-véhicule se déplace latéralement sur une voie dite égo-voie. Lorsqu'on arrive dans cette étape, cela signifie que le conducteur n'a pas intentionnellement voulu changer de voie. Il souhaite rester dans l'égo-voie. Il continuer à prendre en compte la vitesse du véhicule cible. Ainsi, la régulation de vitesse reste fonction du véhicule cible, même si l'égo-véhicule effectue de petits déplacements latéraux. Un petit déplacement latéral correspond à une rotation de quelques degrés d'angle volant, comme par exemple de l'ordre de 2 ° si l'égo-véhicule circule à 130 km/h. Cela peut être plusieurs dizaines de degrés de rotation d'angle volant pour une vitesse de circulation plus faible.

L'étape 206, DesACC, est une étape de désélection du véhicule cible même si le véhicule est visible par le LIDAR. En effet, le conducteur a clairement exprimé son intention de changer de voie pour circuler dans une nouvelle voie. Il n'est plus question de restreindre la vitesse du véhicule par rapport à au véhicule cible qui ne sera plus dans la nouvelle voie.

La présente invention ne se limite pas aux formes de réalisation décrites ci-avant à titre d'exemples ; elle s'étend à d'autres variantes, dans la limite de l'étendue de protection définie par les revendications.

Ainsi, on a décrit ci-avant un exemple de réalisation dans lequel nous avons déterminé la non intention du conducteur de changer de voie. Nous avons rendu plus robuste la détermination de changement de voie par une caméra embarquée pour rendre plus simple et moins dépendant un réglage de paramètre d'un système ACC couplé avec un système de type LKA ou de type d'action sur la direction de l'égo-véhicule. L'amélioration de la robustesse reste possible en prenant en compte d'autres valeurs mesurées ou estimées représentant une intention de changer de voie par un conducteur comme l'activation des clignotants, l'angle de rotation volant et/ou d'un arbre de direction, le déplacement d'une crémaillère de direction, des efforts ou couple pneumatiques, des accélération longitudinale et transversale, une vitesse et/ou accélération de lacet, ...

## Revendications

1. Procédé de maintien d'une sélection d'un véhicule cible par un système d'aide à la conduite embarqué dans un égo-véhicule lorsque ledit égo-véhicule se déplace latéralement sur une voie dite égo-voie, ledit système d'aide à la conduite comprenant une caméra apte à détecter ledit déplacement latéral, ledit système d'aide à la conduite comprenant, en outre, un régulateur de vitesse apte à réguler la vitesse de l'égo-véhicule en fonction d'une distance relative entre ledit égo-véhicule et ledit véhicule cible, ledit véhicule cible circulant sur ladite égo-voie devant ledit égo-véhicule, ledit procédé comportant les étapes de :
• Détection (201), par la caméra, dudit déplacement latéral de l'égo-véhicule et détermination d'un côté latéral dudit déplacement latéral de l'égo-véhicule, ledit côté déterminé est dit côté déplacement, un côté opposé audit côté déplacement est dit côte opposé ;
• Détection (202), par un capteur fondé sur une mesure d'une réflexion d'onde émise par ledit capteur, d'un objet situé à gauche ou à droite par rapport audit égo-véhicule, ladite détection détermine une probabilité de présence, détermine une position par rapport à audit égo-véhicule, et détermine un côté, côté déplacement ou côté opposé, où se situe ledit objet détecté par rapport à l'égo-véhicule ;
• Détermination (203) d'une distance latérale relative entre ledit égo-véhicule et ledit objet détecté ;
• Si ladite probabilité de présence est supérieure à un seuil prédéterminé, alors si l'objet détecté est du côté déplacement, tant que ladite distance latérale relative est supérieure à un premier seuil (204) alors la sélection dudit véhicule cible est maintenue (205), et si l'objet détecté est du côté opposé, tant que ladite distance latérale relative est inférieure à un deuxième seuil (204) alors la sélection du véhicule cible est maintenue (205), le premier seuil et/ou le deuxième seuil étant fonction d'une détermination de largeur de l'égo-voie.

2. Procédé selon la revendication 1, dans lequel la détection dudit déplacement latéral de l'égo-véhicule est fonction d'une identification paramétrique d'une courbe d'une ligne de l'égo-voie.

3. Procédé selon l'une des revendications précédentes, dans lequel la détection d'un objet et la détermination de la distance latérale relative est déterminée à partir d'un traitement d'informations issues d'au moins un radar embarqué sur ledit égo-véhicule.

4. Procédé selon l'une des revendications précédentes, dans lequel la détection d'un objet et la détermination de la distance latérale relative est déterminée à partir d'un traitement d'informations issues d'au moins un capteur ultra-sons embarqué sur ledit égo-véhicule.

5. Procédé selon l'une des revendications précédentes, dans lequel le premier seuil et/ou le deuxième seuil est fonction de l'objet détecté.

6. Dispositif (101) comprenant une mémoire (102) associée à au moins un processeur (103) configuré pour mettre en œuvre le procédé selon l'une des revendications précédentes.

7. Véhicule comportant le dispositif selon la revendication précédente.

8. Programme d'ordinateur comprenant des instructions adaptées pour l'exécution des étapes du procédé selon l'une des revendications 1 à 5 lorsque ledit programme est exécuté par au moins un processeur (103).

## Patentansprüche

1. Verfahren zum Aufrechterhalten einer Auswahl eines Zielfahrzeugs durch ein Fahrerassistenzsystem, das in einem Ego-Fahrzeug eingebaut ist, wenn sich das Ego-Fahrzeug seitlich auf einer so genannten Ego-Spur bewegt, wobei das Fahrerassistenzsystem eine Kamera umfasst, die die seitliche Bewegung erfassen kann, wobei das Fahrerassistenzsystem ferner einen Geschwindigkeitsregler umfasst, der die Geschwindigkeit des Ego-Fahrzeugs in Abhängigkeit von einer relativen Entfernung zwischen dem Ego-Fahrzeug und dem Zielfahrzeug regelt, wobei das Zielfahrzeug auf der Ego-Spur vor dem Ego-Fahrzeug fährt, wobei das Verfahren die folgenden Schritte umfasst:
• Erfassung (201) der seitlichen Bewegung des Ego-Fahrzeugs durch die Kamera und Bestimmung einer seitlichen Seite der seitlichen Bewegung des Ego-Fahrzeugs, wobei die bestimmte Seite als Verlagerungsseite und eine der Verlagerungsseite gegenüberliegende Seite als gegenüberliegende Seite bezeichnet wird;
• Detektion (202) eines Gegenstands, der sich links oder rechts von dem Ego-Fahrzeug befindet, durch einen Sensor, der auf einer Messung einer von dem Sensor emittierten Wellenreflexion basiert, wobei die Detektion eine Anwesenheitswahrscheinlichkeit bestimmt, eine Position in Bezug auf das Ego-Fahrzeug bestimmt und eine Seite, eine Seite, eine Seite, eine Seite oder eine gegenüberliegende Seite, bestimmt, an der sich das detektierte Objekt in Bezug auf das Ego-Fahrzeug befindet;
• Bestimmung (203) eines relativen seitlichen Abstands zwischen dem Ego-Fahrzeug und dem erfassten Objekt;
• Wenn die Anwesenheitswahrscheinlichkeit größer als ein vorbestimmter Schwellenwert ist, dann wird, wenn das erfasste Objekt auf der Fahrseite ist, solange der relative seitliche Abstand größer als ein erster Schwellenwert (204) ist, die Auswahl des Zielfahrzeugs beibehalten (205), und wenn das erfasste Objekt auf der entgegengesetzten Seite ist, solange der relative seitliche Abstand kleiner als ein zweiter Schwellenwert (204) ist, die Auswahl des Zielfahrzeugs beibehalten (205), wobei der erste Schwellenwert und/oder der zweite Schwellenwert von einer Bestimmung der Breite des Gleisabschnitts abhängt.

2. Verfahren nach Anspruch 1, wobei das Erfassen der seitlichen Verlagerung des Ego-Fahrzeugs eine Funktion einer parametrischen Identifizierung einer Kurve einer Linie des Ego-Spur ist.

3. Verfahren nach einem der vorhergehenden Ansprüche, bei dem die Erfassung eines Objekts und die Bestimmung des relativen seitlichen Abstands aus einer Verarbeitung von Informationen von mindestens einem Radar bestimmt wird, das auf dem Ego-Fahrzeug installiert ist.

4. Verfahren nach einem der vorhergehenden Ansprüche, bei dem die Erfassung eines Objekts und die Bestimmung des relativen seitlichen Abstands aus einer Verarbeitung von Informationen von mindestens einem Ultraschallsensor bestimmt wird, der auf dem Ego-Fahrzeug installiert ist.

5. Verfahren nach einem der vorhergehenden Ansprüche, bei dem die erste Schwelle und/oder die zweite Schwelle eine Funktion des erfassten Objekts ist.

6. Vorrichtung (101) mit einem Speicher (102), der mindestens einem Prozessor (103) zugeordnet ist, der so konfiguriert ist, dass er das Verfahren nach einem der vorhergehenden Ansprüche ausführt.

7. Fahrzeug mit der Vorrichtung nach dem vorhergehenden Anspruch.

8. Computerprogramm mit Befehlen, die zur Ausführung der Schritte des Verfahrens nach einem der Ansprüche 1 bis 5 geeignet sind, wenn das Programm von mindestens einem Prozessor (103) ausgeführt wird.

## Claims

1. Method for maintaining a selection of a target vehicle by a driving aid system on board an eco-vehicle when said eco-vehicle is moving laterally on a track called eco-track, said driving aid system comprising a camera capable of detecting said lateral movement, said driving aid system further comprising a speed regulator capable of regulating the speed of the eco-vehicle as a function of a relative distance between said eco-vehicle and said target vehicle, said target vehicle travelling on said eco-track in front of said eco-vehicle, said method comprising the steps of:
• Detection (201), by the camera, of said lateral displacement of the ego-vehicle and determination of a lateral side of said lateral displacement of the ego-vehicle, said determined side is said displacement side, a side opposite said displacement side is said opposite side;
• Detection (202), by a sensor based on a measurement of a wave reflection emitted by said sensor, of an object located to the left or right by report to said ego-vehicle, said detection determines a probability of presence, determines a position by report to said ego-vehicle, and determines a side, side of movement or opposite side, where said object detected by report to the ego-vehicle is located;
• Determination (203) of a relative lateral distance between said eco-vehicle and said detected object;
• If said probability of presence is greater than a predetermined threshold, then if the detected object is of the side displacement, as long as said relative lateral distance is greater than a first threshold (204) then the selection of said target vehicle is retained (205), and if the detected object is of the opposite side, as long as said relative lateral distance is less than a second threshold (204) then the selection of the target vehicle is retained (205), the first threshold and/or the second threshold being a function of a determination of the width of the ego-track.

2. Method according to claim 1, wherein the detection of said lateral displacement of the ego-track is a function of a parametric identification of a curve of a line of the ego-track.

3. Method as claimed in claim 1, wherein the detection of an object and the determination of the relative lateral distance is determined from a processing of information coming from at least one radar on board said eco-vehicle.

4. Method as claimed in claim 1, wherein the detection of an object and the determination of the relative lateral distance is determined from a processing of information coming from at least one ultrasound sensor on board said eco-vehicle.

5. Method according to claim 1, wherein the first threshold and/or the second threshold is a function of the detected object.

6. Device (101) comprising a memory (102) associated with at least one processor (103) configured to implement the method according to one of the previous claims.

7. Vehicle comprising the device according to the previous claim.

8. Computer plan comprising instructions adapted for the execution of the steps of the method according to one of claims 1 to 5 when said plan is executed by at least one processor (103).
